# FASCICULE DE BREVET EUROPEEN

(11) **EP 0 434 532 B1**
(45) Date de publication et mention de la délivrance du brevet: **15.02.1995**
(21) Numéro de dépôt: 90403616.7
(22) Date de dépôt: 14.12.1990
(51) Int. Cl.: G06F 11/20

(54) **Procédé sécurisé d'écriture rapide d'informations pour dispositif de mémoire de masse et système informatique mettant en oeuvre ce procédé**
Sicheres Datenschnellschreibverfahren für Massenspeichereinrichtung und ein dieses Verfahren ausführendes Computersystem
Secure fast data write method for mass-storage device and computer system executing this method

(30) Priorité: 22.12.1989 FR 8917111
(43) Date de publication de la demande: 26.06.1991
(73) Titulaire: BULL S.A., 92800 Puteaux (FR)
(72) Inventeur: Carteau, Daniel, F-78180 Montigny Le Bretonneux (FR); Schreck, Philippe, F-78310 Maurepas (FR)
(74) Mandataire: Gouesmel, Daniel

(56) Documents cités:
- FR-A- 2 486 291
- US-A- 3 964 056
- IBM TECHNICAL DISCLOSURE BULLETIN, vol. 32, no. 2, juillet 1989, pages 378-380,New York, US; "Takeover scheme for control of shared disks"

## Description

La présente invention concerne un procédé sécurisé d'écriture rapide d'informations pour au moins un dispositif de mémoire de masse appartenant à un système informatique comportant au moins un système hôte central. Elle est plus particulièrement applicable à l'écriture d'informations dans une batterie de mémoires à disques rotatifs.

On sait qu'un système informatique est constitué d'une unité centrale, qu'on appelle encore hôte central, formée d'au moins un processeur central et d'une mémoire principale à laquelle ce processeur est relié, de différents organes périphériques et d'un processeur d'entrée/sortie assurant le contrôle de l'échange de données entre la mémoire et ses différents organes.

Des unités de contrôle de périphériques, encore appelées contrôleurs, sont associées aux différents organes périphériques et assurent le transfert physique des données entre l'hôte central et les périphériques associés à ces différents contrôleurs.

Généralement, tous les éléments constitutifs fonctionnels d'un système informatique sont reliés à un même bus de type parallèle qui assure le transport des données entre les différentes cartes portant ces éléments et l'alimentation électrique de celles-ci.

L'un des bus de ce type les plus couramment utilisés est le bus appelé Multibus II (marque déposée par la Société INTEL). Son architecture est structurée autour d'un bus principal de type parallèle normalisé suivant la norme IEEE 1296 (Institute of Electrical and Electronic Engineers).

Parmi les organes périphériques, on relève les mémoires de masse telles que les mémoires à disques magnétiques rotatifs. Celles-ci sont très largement utilisées en informatique car elles permettent d'emmagasiner de très grandes quantités d'informations et d'y accéder relativement rapidement. Leur temps d'accès moyen est de l'ordre de 20 à 25 millisecondes. Les capacités des mémoires à disques du marché les plus performantes dépassent le gigaoctet.

Lorsque l'hôte central désire que des informations soient écrites dans une mémoire à disques donnée, le problème suivant se pose: la mémoire centrale du bus de l'hôte est beaucoup plus réduite en capacité (quelques mégaoctets) que la mémoire à disques rotatifs, et ce, pour des questions de coût, de volume, et de facilité de gestion du travail de cet hôte. Par contre, le temps d'accès aux informations contenues dans la mémoire centrale est très faible, de l'ordre d'une ou deux centaines de nanosecondes.

Par conséquent, lorsque le système hôte désire écrire des informations sur un disque d'une mémoire à disques, il doit conserver les données correspondantes dans sa mémoire centrale tant que l'enregistrement n'aura pas été effectué dans sa totalité sur le disque considéré. Ceci a l'avantage d'assurer la sécurité des données; par contre, une partie de la mémoire centrale de l'hôte est indisponible pendant quelques 20 à 25 millisecondes en moyennne, ce qui est considérable vu la rapidité des processeurs actuels, et par conséquent coûteux.

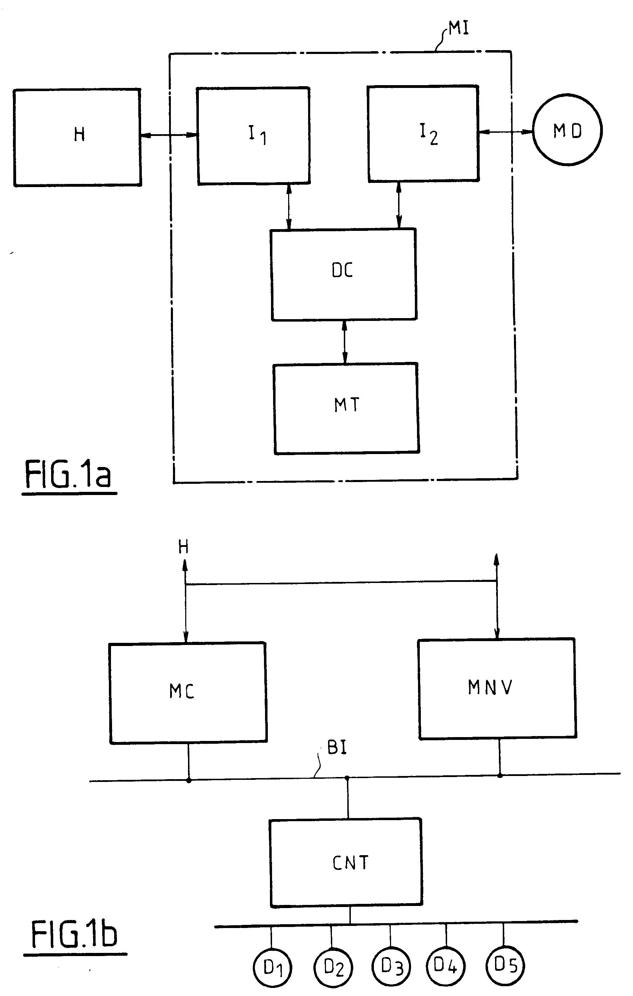

Pour remédier à cet inconvénient, on dispose entre le système hôte et la ou les mémoires à disques, une mémoire intercalaire, comme on peut le voir à la figure 1A, qui montre de façon schématique, la solution décrite dans le brevet français 2.486.291 déposé le 4 juillet 1980. La mémoire intercalaire MI est disposée entre le système hôte H et une mémoire à disque MD.

La mémoire intercalaire MI comprend un premier circuit d'interface I₁ avec le système hôte H, un second circuit d'interface I₂ avec!a mémoire à disque MD, un dispositif de commande DC de la mémoire intercalaire connecté respectivement aux deux circuits d'interface I₁ et I₂ d'une part, et d'autre part à une mémoire tampon MT.

Lorsque l'hôte central H désire inscrire des informations dans la mémoire à disque MD, celles-ci transitent, sous la direction du dispositif de commande DC, via le premier circuit d'interface I₁ et le dispositif de commande lui-même, dans la mémoire tampon MT où elles sont stockées. Elles y attendent d'être transférées, sous la conduite du dispositif de commande DC, via le circuit d'interface I₂ dans la mémoire à disque MD, lorsque des emplacements de mémoire sur l'un des disques rotatifs de celle-ci se trouvent disponibles. Dès que l'ensemble des informations que souhaite inscrire l'hôte central H dans la mémoire à disque MD est transféré dans la mémoire tampon MT, le système hôte peut affecter les emplacements mémoires de sa mémoire centrale rendus disponible par le transfert des dites informations, à l'inscription d'autres informations. Il est clair qu'à partir du moment où les données sont transférées dans la mémoire intercalaire MI, c'est le dispositif de commande DC de celle-ci qui mène à bien l'inscription des informations en question dans la mémoire à disque MD.

Le principal inconvénient du dispositif à mémoire intercalaire MI montré à la figure 1A est le suivant : lorsque, pour une raison quelconque (défaillance de l'un quelconque des circuits composant la mémoire intercalaire MI, défaut d'alimentation de celle-ci, opération de maintenance), la mémoire intercalaire MI se trouve défaillante, les données qui y sont inscrites sont perdues. L'opération d'écriture des informations dans la mémoire à disque MD n'est donc pas effectuée en toute sécurité. Pour remédier à cet inconvénient, on utilise, dans la pratique courante actuelle, un dispositif inspiré de celui montré à la figure 1B, qui correspond au sous-système de mémoire de masse 3390 de la Société IBM.

Ce dispositif comprend disposé entre le système hôte H et une batterie de mémoires à disques D₁ à D₅, une mémoire cache MC de forte capacité (quelques dizaines de mégaoctets), une mémoire non volatile MNV associée à une alimentation de secours par batterie, la mémoire cache et la mémoire non volatile étant reliées à un même bus interne BI auquel est également connecté le contrôleur CNT des mémoires à disques D₁ à D₅.

Lorsque le système hôte H désire inscrire des informations données dans l'une quelconque des mémoires à disques D₁ à D₅, on écrit d'abord les informations dans la mémoire cache MC et dans la mémoire non volatile MNV, les informations étant écrites sur le disque en question, par la suite, en allant chercher les informations dans la mémoire cache.

Le principal inconvénient du dispositif montré à la figure 1b est le fait d'utiliser une mémoire cache dont le prix unitaire du mégaoctet est d'une dizaine de fois supérieur au prix unitaire du mégaoctet sur les disques. Par ailleurs, la mémoire non volatile est également très chère et pour cette raison n'est offerte sur le marché que pour les dispositifs haut de gamme.

La présente invention permet de remédier à ces inconvénients en proposant un procédé d'écriture rapide d'informations, sécurisé, pour un dispositif de mémoire de masse, relativement simple, beaucoup moins coûteux que les procédés utilisés dans les systèmes de l'art antérieur.

L'invention consiste en un procédé sécurisé d'écriture rapide selon la revendication 1.

Dans un tel procédé sécurisé d'écriture rapide d'informations pour au moins un dispositif de mémoire de masse appartenant à un système informatique comportant au moins un hôte central, deux unités de contrôle à alimentation électrique indépendante possédant respectivement au moins un premier et un second processeur central, connectées à un premier et à un second bus de type parallèle, est caractérisé en ce que, l'hôte étant relié à chacun des deux bus par au moins un premier adaptateur hôte appartenant à la première unité de contrôle et comportant un premier tampon hôte, la mémoire de masse étant reliée à chacun des deux bus par un premier et un second adaptateur mémoire de masse appartenant respectivement à la première et à la seconde unité de contrôle, les deux adaptateurs mémoire de masse comportant respectivement un premier et un second tampon associé aux mémoires de masse dit tampon mémoire, on effectue les opérations successives suivantes :
I - On mémorise le bloc de données que veut écrire l'hôte, dans le premier tampon hôte puis dans le premier tampon mémoire, par dialogue entre l'hôte et l'adaptateur hôte d'une part, et le premier adaptateur hôte et le premier adaptateur mémoire de masse d'autre part,
II - Le premier adaptateur mémoire de masse demande la réservation de la mémoire de masse en vue d'y écrire le bloc précité,
III - Dès que la réservation de celle-ci est obtenue, le premier adaptateur mémoire de masse en informe l'adaptateur hôte qui envoie alors un signal d'acquittement à l'hôte central,
IV - L'opération d'écriture du bloc dans son entier est effectuée dans la mémoire de masse sous la conduite du premier adaptateur mémoire de masse dans tous les cas de son bon fonctionnement et par le second adaptateur mémoire de masse dans le cas où ce premier est défectueux.

Ainsi, le procédé selon l'invention utilise les mémoires tampon des adaptateurs hôte et adaptateurs mémoire de masse, mémoires tampon qui existent en dehors de leur utilisation spécifique pour le procédé selon l'invention. En effet, elles sont de toute façon présentes dans les adaptateurs hôte et adaptateurs mémoire de masse qui sont les circuits d'interface normalement utilisés pour relier l'hôte central et les mémoires de masse à des bus de type Multibus II.

Le procédé selon l'invention permet donc d'éviter l'utilisation de cartes spécifiques à rajouter, comme c'est le cas par exemple pour le dispositif de la figure 1b.

Le dispositif de mémoire de masse utilisant le procédé selon l'invention est un sous-système intelligent, redondant parce que constitué de deux contrôleurs reliés entre eux, qui seul peut proposer un tel procédé d'écriture rapide peu coûteux, permettant d'assurer en toute sécurité l'inscription des données dans les mémoires de masse, quels que soient les pannes ou incidents de fonctionnement qui affectent tout ou partie du dispositif.

D'autres caractéristiques et avantages de la présente invention apparaîtront dans la description suivante donnée à titre d'exemple non limitatif et en se référant aux dessins annexés.

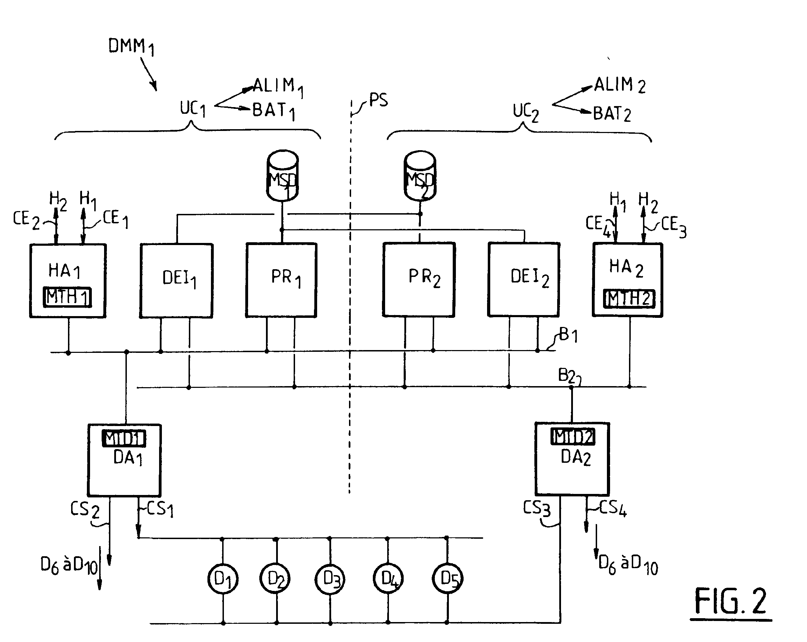

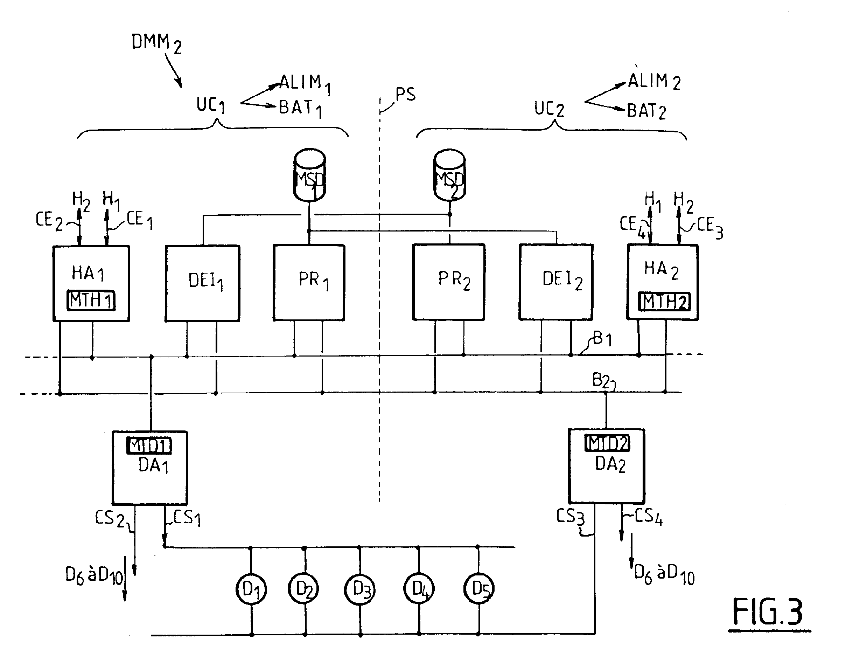

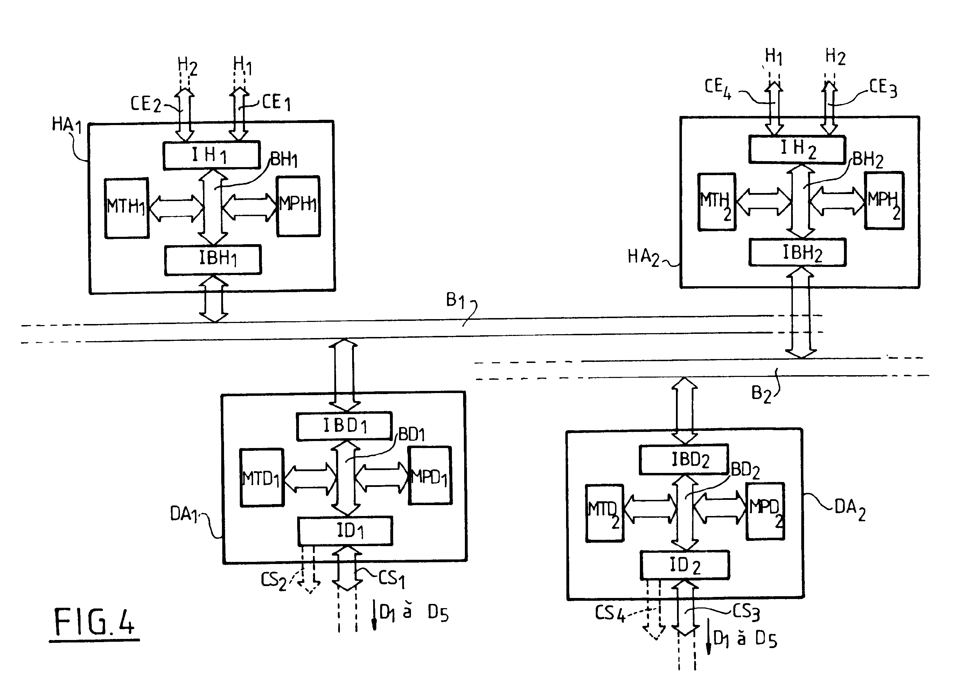

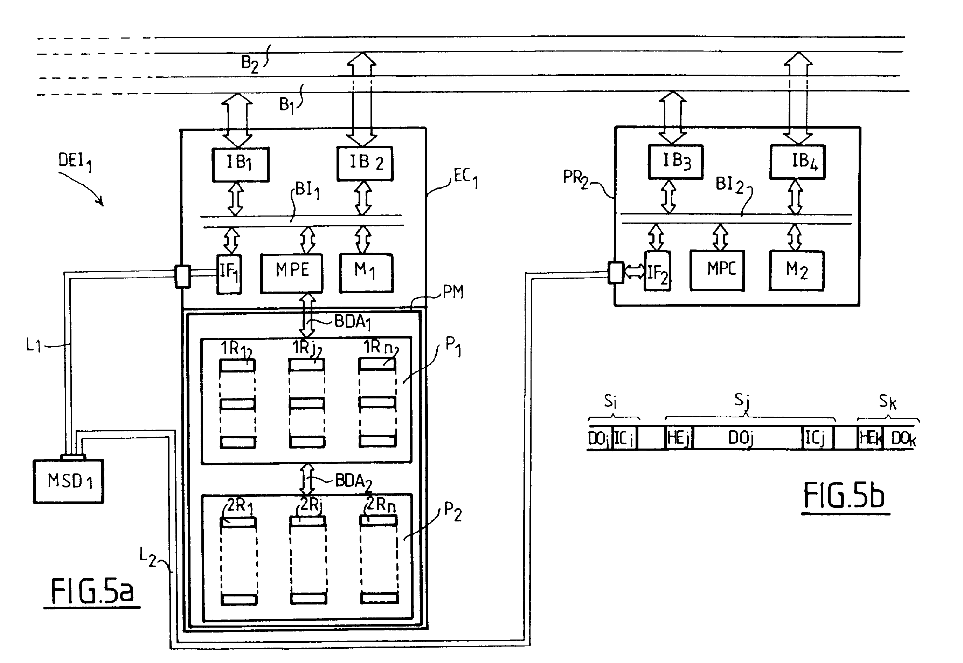

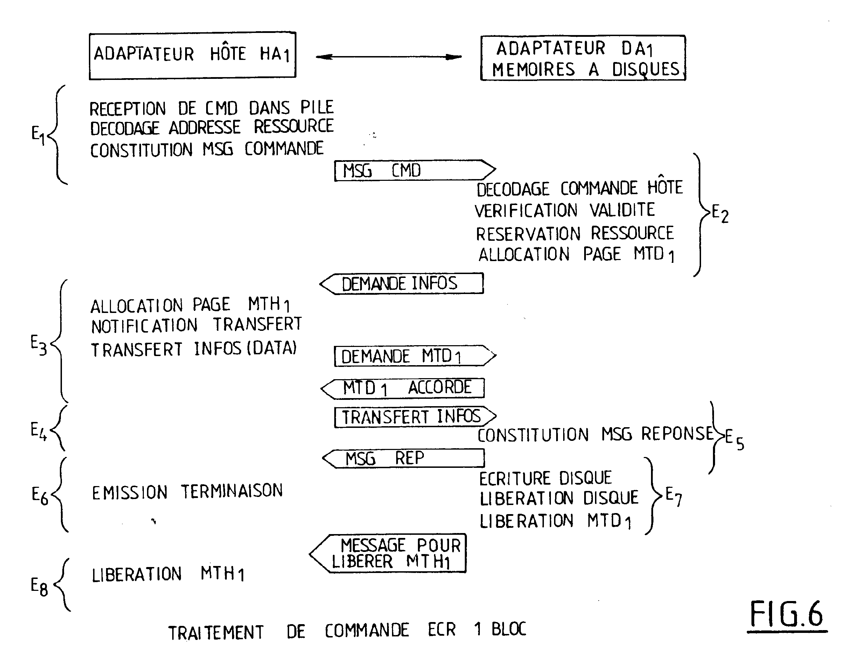

Sur ces dessins :
- ***La* *figure* *1*** composée des figures 1a et 1b montre des dispositifs de mémoire de masse utilisant des procédés d'écriture pour mémoires de masse, selon l'art antérieur,
- ***La* *figure* *2*** montre le schéma d'un premier exemple de réalisation d'un dispositif de mémoire de masse mettant en oeuvre le procédé d'écriture selon l'invention,
- ***La* *figure* *3*** montre le schéma d'un second exemple de réalisation d'un dispositif de mémoire de masse utilisant le procédé d'écriture selon l'invention,
- ***La* *figure* *4*** montre le schéma détaillé de constitution des adaptateurs hôte et adaptateurs mémoire de masse appartenant au dispositif de mémoire de masse selon l'invention,
- ***La* *figure* *5*** composée des figures 5a et 5b montre le schéma des éléments constitutifs principaux d'une mémoire de masse électronique et du processeur central appartenant respectivement à la première et à la seconde unité de contrôle du dispositif de mémoire de masse selon l'invention, la figure 5b montrant comment sont écrites les informations aussi bien à l'intérieur d'une mémoire de masse électronique qu'à l'intérieur d'une mémoire de masse à disques rotatifs,
- ***La* *figure* *6*** montre l'organigramme du dialogue entre l'adaptateur hôte et l'adaptateur mémoire de masse, qui permet la mise en oeuvre du procédé d'écriture selon l'invention.

On considère tout d'abord la figure 2. Celle-ci montre la première forme de réalisation DMM₁ du dispositif de mémoire de masse mettant en oeuvre le procédé sécurisé d'écriture rapide selon l'invention.

Ce dispositif DMM₁ peut être considéré comme un sous-système de mémoire de masse appartenant à un système informatique plus vaste dont la partie centrale comprend par exemple deux systèmes hôte H₁ et H₂.

Le dispositif DMM₁ comprend, de préférence, deux unités de contrôle identiques, à savoir UC₁ occupant la partie gauche de la figure 2 et UC₂ occupant la partie droite.

L'architecture du dispositif DMM₁ est construite autour de deux bus identiques, parallèles l'un à l'autre, de préférence de type Multibus II, désignés par B₁ et B₂.

On voit que les deux bus présentent une zone centrale où ils sont totalement en regard l'un de l'autre et deux zones latérales où ils ne sont pas en regard l'un de l'autre.

Les deux unités de contrôle UC₁ et UC₂ sont strictement identiques et symétriques l'une de l'autre par rapport à un plan de symétrie PS.

La première unité de contrôle UC₁ est alimentée en énergie électrique par une première alimentation ALIM₁ et est connectée à une première alimentation en énergie électrique de secours, formée d'une batterie, à savoir BAT₁.

De même la seconde unité de contrôle UC₂ est alimentée par une seconde alimentation ALIM₂ indépendante de la première, et connectée à une seconde alimentation de secours BAT₂.

La première unité de contrôle UC₁ comprend :
- Un premier processeur central PR₁,
- Une première carte d'interface DEI₁,
- Un adaptateur hôte HA₁ comprenant une première mémoire tampon appelée tampon hôte, à savoir MTH₁,
- Un adaptateur mémoire de masse (mémoires à disques D₁ à D₅), à savoir DA₁ comprenant une première mémoire tampon, plus communément appelée pour simplifier premier tampon mémoire, à savoir MTD₁, cet adaptateur étant appelé, ici, pour simplifier, adaptateur disque.
- La mémoire à disques de sauvegarde MSD₁.

De même, la seconde unité de contrôle UC₂ comprend le second processeur central PR₂, la seconde carte d'interface DEI₂, l'adaptateur hôte HA₂, comprenant le second tampon hôte MTH₂, le second adaptateur disque DA₂ comprenant le second tampon mémoire MTD₂, et la seconde mémoire à disques de sauvegarde MSD₂.

Le premier et le second adaptateurs disque DA₁ et DA₂ sont reliés par l'intermédiaire respectivement des liaisons CS₁ et CS₃ à une batterie de mémoires à disques, dont seulement 5 sont représentées à la figure 2 à savoir les mémoires à disques D₁ à D₅. Le premier et second adaptateurs disque DA₁ et DA₂ peuvent être également connectés par l'intermédiaire respectivement des liaisons CS₂ et CS₃ à une seconde batterie de mémoires à disques D₆ à D₁₀ non représentée pour simplifier à la figure 2.

Les liaisons CS₁ à CS₄ sont des liaisons de type IPI-2 normalisées par l'ANSI (American National Standard Institute) et également par l'ISO (International Standard Organization).

Le premier adaptateur hôte HA₁ est relié par l'intermédiaire d'un premier canal de liaison CE₁ à un premier hôte H₁ et par un second canal de liaison CE₂ à un second hôte H₂.

De même le second adaptateur hôte HA₂ est relié par l'intermédiaire d'un premier canal de liaison CE₃ au second hôte H₂ et par l'intermédiaire d'un second canal de liaison CE₄ au premier hôte H₁.

Les premiers canaux de liaison CE₁ et CE₃ des premier et second adaptateurs hôte HA₁ et HA₂ sont prioritaires par rapport aux seconds canaux de liaison CE₂ et CE₄.

Les quatre canaux de liaison CE₁ à CE₄ sont de type IPI-3 normalisés par l'ANSI (et également par l'ISO).

Les éléments constitutifs de la première unité de contrôle à savoir PR₁, DEI₁, HA₁, DA₁, MSD₁, sont identiques et symétriques des éléments correspondants de la seconde unité de contrôle UC₂ à savoir PR₂, DEI₂, HA₂, DA₂, MSD₂.

Les quatre éléments constitutifs DEI₁, PR₁, PR₂, DEI₂, sont connectés simultanément aux deux bus B₁ et B₂ dans la partie centrale de ceux-ci où ils sont en regard l'un de l'autre.

Les éléments constitutifs HA₁ et DA₁ de la première unité de contrôle UC₁ sont connectés au premier bus B₁, alors que les éléments correspondants HA₂ et DA₂ de la seconde unité de contrôle UC₂ le sont au second bus B₂.

La première mémoire à disques de sauvegarde MSD₁ est reliée d'une part au premier processeur central PR₁ et d'autre part à la seconde carte d'interface DEI₂.

De même, la seconde mémoire à disques de sauvegarde MSD₂ est connectée à la fois au second processeur central PR₂ et à la seconde carte d'interface DEI₁. Ainsi, les deux mémoires à disques de sauvegarde MSD₁ et MSD₂ sont accessibles à la fois par la première et la seconde unité de contrôle UC₁ et UC₂.

A la figure 2 (et également à la figure 3) le dispositif de mémoire de masse DMM₁ (DMM₂ à la figure 3) est représenté comprenant deux batteries de cinq mémoires à disques chacune, mais il est évident que le dispositif de mémoire de masse peut contenir soit un nombre inférieur, soit plus fréquemment un nombre supérieur de mémoires à disques, ce nombre pouvant atteindre plusieurs dizaines voire même un peu plus d'une centaine.

Le second exemple de réalisation du dispositif de mémoire de masse selon l'invention, à savoir DMM₂ montré à la figure 3 est identique dans ses plus grandes lignes au premier exemple de réalisation DMM₁ montré à la figure 2, à cette différence près que les deux bus B₁ et B₂ sont totalement en regard l'un de l'autre, et que le premier et second adaptateurs hôte HA₁ et HA₂ sont connectés simultanément à ces deux bus, alors que les seconds adaptateurs mémoire de masse DA₁ et DA₂ sont respectivement connectés, l'un un bus B₁, l'autre au bus B₂. Les conséquences de cette légère différence de structure apparaîtront mieux dans la suite de la description relative au fonctionnement de ces dispositifs de mémoires de masse selon l'invention.

Les deux processeurs centraux PR₁ et PR₂ sont les maîtres d'oeuvre, respectivement, des différents éléments appartenant à chacune des unités de contrôle UC₁ et UC₂. Ils chargent les programmes de mise en oeuvre des différents éléments inclus dans ces unités de contrôle à l'intérieur de ceux-ci afin que ces derniers puissent remplir les fonctions qui leur sont dévolues. Les processeurs PR₁ et PR₂ vont chercher ces programmes qui sont stockés, par exemple, dans les mémoires à disques rotatifs de sauvegarde MSD₁ et MSD₂. Dans ce cas, ces dernières ont une double fonction, à savoir, d'une part la sauvegarde des informations non encore stockées et en attente d'être écrites dans les mémoires à disques rotatifs D₁ à D₅ (en cas de toute panne rendant indisponibles DA₁ et DA₂), et d'autre part, le stockage des programmes de mise en oeuvre précités. Cependant, ces derniers pourraient être stockés dans une mémoire à disques spéciale, dite mémoire à disques système reliée aussi bien au processeur PR₁ qu'au processeur PR₂.

La structure plus détaillée des adaptateurs hôte HA₁, HA₂ et des adaptateurs disque DA₁ et DA₂ apparaît à la figure 4.

Le premier adaptateur hôte HA₁ comprend :
- une interface de liaison IH₁ avec les deux systèmes hôte H₁ et H₂ par l'intermédiaire des canaux de liaison CE₁ et CE₂, cet interface de liaison étant défini par la norme IPI-3 précitée,
- la mémoire tampon hôte, encore appelée pour simplifier tampon hôte MTH₁,
- le microprocesseur MPH₁,
- l'interface de connexion IBH₁ avec le bus Multibus II, B₁, cette interface étant définie par la norme IEEE 1296 précitée, et par exemple constituée par un coprocesseur, de type VL 82c389 (fabriqué par la Société INTEL) communiquant par mode message avec les autres éléments constitutifs fonctionnels du dispositif de mémoire de masse DMM₁ selon l'invention.

De même, le second adaptateur hôte HA₂ comprend l'interface de liaison IH₂ avec les deux systèmes hôte H₁ et H₂ par l'intermédiaire des deux canaux CE₃ et CE₄, la seconde mémoire tampon hôte MTH₂, le microprocesseur MPH₂ et l'interface de connexion IBH₂ avec le bus Multibus II, B₂. Il est clair que les éléments constitutifs équivalents de chacun des premier et second adaptateurs hôte HA₁ et HA₂ remplissent des fonctions analogues.

Les élements constitutifs respectifs des premier et second adaptateurs hôte communiquent entre eux par les bus internes BH₁ et BH₂ des microprocesseurs MPH₁ et MPH₂.

La structure des premiers et seconds adaptateurs disque DA₁ et DA₂ est similaire à la structure des adaptateurs hôte.

Ainsi, le premier adaptateur DA₁ comprend une interface de connexion IBD₁ avec le bus B₁ défini par la norme IEEE 1296 précitée, une mémoire tampon pour les mémoires à disques, appelée plus simplement tampon mémoire, à savoir MTD₁, le microprocesseur MPD₁ et enfin l'interface ID₁ de liaison avec les mémoires à disques D₁ à D₅ et D₆ à D₁₀ par l'intermédiaire des canaux de liaison de type IPI-2, CS₁ et CS₂ (ces interfaces étant définies par la norme IPI-2 précitée).

De même le second adaptateur disque DA₂ comprend l'interface de connexion IBD₂ avec le bus B₂ défini par la norme IEEE 1296 précitée, le tampon hôte MTD₂, le microprocesseur MPD₂, et l'interface de liaison ID₂ avec les deux batteries de mémoires à disques D₁ à D₅ et D₆ à D₁₀ par l'intermédiaire des canaux de liaison CS₃ et CS₄.

Les différents éléments constitutifs des adaptateurs disque DA₁ et DA₂ communiquent entre eux par l'intermédiaire des bus internes BD₁ et BD₂ des microprocesseurs MPD₁ et MPD₂.

Les grandes lignes du procédé d'écriture selon l'invention mises en oeuvre par le dispositif de mémoire de masse DMM₁ montré aux figures 2 à 4, sont les suivantes :
I - Lorsque le système hôte H₁, par exemple, désire écrire un bloc de données dans l'une quelconque des mémoires à disques de la batterie D₁ à D₅, on mémorise ce bloc de données à écrire dans le premier tampon hôte MTH₁ puis dans le premier tampon mémoire MTD₁, par dialogue successivement entre l'hôte H₁ et l'adaptateur hôte HA₁, sous la conduite, du côté de ce dernier, du microprocesseur MPH₁, d'une part, et entre l'adaptateur hôte HA₁ et l'adaptateur disque DA₁, sous la conduite respectivement des microprocesseur MPH₁ et MPD₁, d'autre part.
   De façon plus précise, pour réaliser cette opération I, on effectue les trois sous-opérations suivantes :
   1. Le système hôte H₁ envoie une requête d'écriture d'un bloc de données à l'adaptateur hôte (par exemple par l'intermédiaire du canal CE₁),
   2. L'adaptateur hôte HA₁ demande à l'hôte H₁ le transfert du bloc des données à écrire,
   3. Ce bloc dans son entier est mémorisé en premier lieu dans le tampon hôte MTH₁, puis également dans le tampon mémoire MTD₁ (le bloc de données à écrire transitant par le bus interne BH₁, l'interface IBH₁, le bus Multibus II P₁, l'interface IBD₁, le bus interne BD₁).
II - L'adaptateur disque DA₁, sous la conduite du microprocesseur MPD₁ demande la réservation de la mémoire à disques D₁ à D₅ qui est adressée par l'hôte H₁ (c'est ce dernier qui indique dans sa requête d'écriture quelle mémoire à disques est adressée, c'est-à-dire la mémoire à disques où doit être écrit le bloc de données), en vue d'y écrire le bloc précité.
III - Dès que cette réservation est obtenue par accord de la mémoire à disques adressée, l'adaptateur disque (le microprocesseur MPD₁) en informe l'adaptateur hôte HA₁ (le microprocesseur MPH₁) lequel envoie alors un signal d'acquittement au système hôte H₁. Ce dernier est donc libre pour effectuer d'autres opérations, alors que l'adaptateur disque DA₁ n'a pas encore organisé l'opération d'écriture du bloc de données précité dans la mémoire à disque considérée.
IV - L'opération d'écriture du bloc est effectuée sous le contrôle du microprocesseur MPD₁.

Le programme de dialogue entre l'adaptateur hôte HA₁ et le système hôte H₁ est chargé, à l'initialisation du dispositif de mémoire de masse DMM₁, par le processeur central PR₁, dans le microprocesseur MPH₁ (ou plutôt dans la mémoire associée à celui-ci, non représentée pour simplifier à la figure 4). De même, le programme de dialogue entre les adaptateurs hôte et les adaptateurs disque est chargé par le processeur central PR₁ dans les microprocesseurs MPH₁ et MPD₁. Quant au programme d'écriture du bloc de données dans l'une quelconque des mémoires à disques D₁ à D₅ (ou D₆ à D₁₀), ce dernier est chargé, toujours à l'initialisation du dispositif de mémoire de masse, par le processeur central PR₁ dans le microprocesseur MPD₁.

Il est clair que ce qui vient d'être décrit pour le procédé d'écriture selon l'invention relatif au premier adaptateur hôte et premier adaptateur disque, est également valable pour les seconds adaptateur hôte et adaptateur disque HA₂ et DA₂.

A la fin de l'opération III, on a vu que l'hôte ayant reçu un signal d'acquittement de la part de la part de l'adaptateur HA₁, pense que l'opération d'écriture du bloc de données est effectuée sur la mémoire à disques adressée, alors qu'en réalité elle ne l'est pas. Le dispositif de mémoire de masse DMM₁ a donc la responsabilité, dès que cette opération III est terminée, de mener à bien cette opération d'écriture du bloc de données, quels que soient les incidents de fonctionnement pouvant survenir, qu'il s'agisse d'une panne des adaptateurs hôte HA₁ ou HA₂, des adaptateurs disque DA₁ et DA₂, des deux unités de contrôle UC₁ et UC₂ soit séparément, soit simultanément, soit de l'un ou l'autre des deux bus. C'est précisément un objet essentiel du procédé d'écriture selon l'invention de mener à bien en toute sécurité l'écriture du bloc de données dans son intégralité dans la mémoire à disques adressée, quelles que soient les circonstances énoncées ci-dessus. C'est pour cette raison que le procédé selon l'invention est appelé procédé sécurisé d'écriture rapide. Les différents cas de panne et incidents de fonctionnement du dispositif de mémoire de masse selon l'invention survenant dès la fin de l'opération III, avec les conséquences que cela entraîne pour le procédé d'écriture rapide, sont décrits ci-dessous.

Lorsque l'adaptateur hôte HA₁ devient défectueux, l'adaptateur disque DA₁ n'est pas perturbé. Il a toujours les données à sa disposition dans son tampon mémoire MTD₁ et effectue ou termine l'opération d'écriture, quel que soit l'instant où HA₁ devient défectueux.

Lorsque l'adaptateur disque DA₁ devient défectueux, le bloc de données à écrire est envoyé par le premier adaptateur hôte HA₁, dans le second adaptateur disque par l'intermédiaire de B₁ et PR₁ (rappelons que le premier adaptateur hôte HA₁ contient dans son propre tampon hôte MTH₁ l'intégralité du bloc de données à écrire). Le second adaptateur disque DA₂ effectue alors, en lieu et place du premier adaptateur disque, les opérations II, III, IV, l'adaptateur disque DA₂ dialoguant avec le premier processeur central PR₁, par l'intermédiaire du bus B₂ pour les opérations II et III.

Lorsque l'alimentation du secteur vient à manquer, les deux alimentations ALIM₁ et ALIM₂ sont donc inopérantes. Chaque unité de contrôle UC₁ et UC₂ possédant sa propre batterie de protection BAT₁, BAT₂, le processeur principal PR₁, après avoir détecté la coupure de tension de secteur, organise le transfert du bloc de données contenu dans le tampon mémoire MTD₁ dans la mémoire à disques de sauvegarde MSD₁. Il organise également le transfert de toutes les indications nécessaires à la réalisation effective de l'opération d'écriture (programme d'écriture qui était contenu dans l'adaptateur mémoire DA₁) sur l'un des disques rotatifs de la mémoire à disques de sauvegarde MSD₁. Lorsque les opérations de sauvegarde sur cette dernière sont terminées, le processeur principal PR₁ demande la déconnexion de la batterie BAT₁. Il est clair que des opérations analogues à celles effectuées par le processeur PR₁ sont effectuées par le processeur PR₂.

Lorsque l'alimentation de secteur est de retour, le processeur principal PR₁ détecte celui-ci, et remet l'unité de contrôle UC₁ dans l'état où elle se trouvait immédiatement avant la coupure, en allant chercher les informations nécessaires qui ont été sauvegardées dans la mémoire à disques de sauvegarde MSD₁. Ainsi, le bloc de données à écrire est à nouveau envoyé dans le tampon mémoire MTD₁, le programme d'écriture étant réinscrit dans le microprocesseur MPD₁. Le premier processeur prévient l'hôte central de cette remise en l'état précédant la coupure de tension, et l'on peut procéder à nouveau aux opérations II, III, IV précitées. Il est à noter que le bloc de données à écrire est réécrit dans son entier sur la mémoire à disques à l'endroit réservé à cet effet (spécifié par H₁ dans sa requête d'écriture), même si une partie de ce bloc avait été écrit précédemment sur celle-ci avant la coupure de l'alimentation secteur.

Dans le cas d'une panne du processeur principal PR₁, il est bien entendu possible d'accéder à la mémoire à disques de sauvegarde MSD₁ à partir de l'autre unité de contrôle, via la carte d'interface DEI₂, aussi bien pour des opérations de sauvegarde que pour des opérations de rééinitialisation du contexte, et ce, dans le cas d'une coupure secteur, les opérations étant alors effectuées sous le contrôle du second processeur principal PR₂.

De même, lorsque PR₁ est défectueux, toute opération d'écriture effectuée par l'adaptateur hôte et l'adaptateur disque HA₁ et DA₁, est effectuée en liaison avec le processeur principal PR₂.

Lorsque le Multibus II B₁ tombe en panne, l'adaptateur disque DA₁, ayant toujours en mémoire (dans MTD₁) le bloc à écrire, effectue son travail d'écriture normalement.

La structure du dispositif de mémoire selon l'invention DMM₂ montré à la figure 3 permet, non seulement de résoudre les incidents de fonctionnement mentionnés ci-dessus (adaptateur hôte, adaptateur mémoire, processeur principal, coupure d'alimentation des deux unités de contrôle, panne des bus B₁ et/ou B₂), mais également de résoudre l'incident suivant, à savoir une panne de l'une ou l'autre des unités de contrôle pendant que se déroule le procédé d'écriture selon l'invention, les informations étant supposées avoir été mémorisées dans les tampons hôte et tampons mémoire.

Ainsi qu'on peut le voir à la figure 3, dès que le bloc de données à écrire a été inscrit dans le tampon hôte MTH₁, ce même bloc de données à écrire est transmis à l'adaptateur disque DA₂ où il est inscrit dans le tampon mémoire MTD₂, les informations transitant du premier adaptateur hôte HA₁ au second adaptateur disque DA₂ par l'intermédiaire du bus B₂ et ce, que UC₁ fonctionne ou non. Ainsi, le bloc de données ayant été transféré dans le tampon mémoire de l'adaptateur disque DA₂, c'est celui-ci qui va mener à bien l'opération d'écriture en liaison avec le processeur principal PR₂ et l'adaptateur hôte HA₁, que UC₁ fonctionne ou qu'il soit défectueux.

On considère désormais la figure 6 qui illustre le dialogue entre l'adaptateur hôte HA₁ et l'adaptateur disque DA₁, lorsque l'on veut écrire un bloc de données dans l'une des mémoires à disques D₁ à D₅ (D₆ à D₁₀).

Ce dialogue comprend les huit étapes suivantes :
1) **Etape E₁** : l'adaptateur hôte reçoit la requête d'écriture de la part de l'hôte, sous forme d'un message de commande CMD qui est envoyé dans une pile de commandes située par exemple dans la mémoire vive du microprocesseur MPH₁. Ce dernier, à l'intérieur de ce message de commande, décode l'adresse de la mémoire à disques dans laquelle doit être écrit le bloc de données. Cette mémoire à disques est appelée pour simplifier ressource. Dès que le microprocesseur MPH₁ a décodé l'adresse de la ressource, il constitue un message de commande MSG qui est envoyé au microprocesseur de l'adaptateur disque DA₁. On passe alors à l'étape suivante.
2) **Etape E₂** : ce message de commandes désigné par MSG CMD est décodé par le microprocesseur MPD₁ qui vérifie la validité de ce message et demande au processeur principal PR₁ la réservation de ladite ressource. Il alloue alors une page (ou plusieurs) du tampon mémoire MTD₁ pour y recevoir ultérieurement le bloc de données.
   Dès que le processeur principal PR₁ notifie à l'adaptateur disque la réservation de la ressource précitée, le microprocesseur MPD₁ envoie alors à l'adaptateur hôte HA₁ un message demandant que ce dernier lui envoie des informations, c'est-à-dire, le bloc de données à écrire. On passe alors à l'étape suivante.
3) **Etape E₃** : le microprocesseur MPH₁ alloue alors une page du tampon hôte MTH₁ et notifie à l'hôte H₁ qu'il attend le transfert du bloc de données dans la page du tampon hôte précité. Il envoie alors une demande de réservation du tampon mémoire MTD₁ à l'adaptateur disque DA₁, lequel retourne à l'adaptateur hôte un message indiquant que le tampon mémoire MTD₁ est accordé. On procède alors à l'étape suivante.
4) **Etape E₄** : l'adaptateur hôte transmet le bloc des données à écrire dans le tampon mémoire de l'adaptateur disque, le bloc de données à écrire restant de toute façon mémorisé également dans le tampon hôte. Lorsque ce transfert est terminé, on passe à l'opération suivante.
5) **Opération E₅** : le microprocesseur MPD₁ constitue un message de réponse signifiant que le transfert de la totalité du bloc de données à écrire a été normalement effectué. Ce message de réponse est transmis au microprocesseur MPH₁ de l'adaptateur hôte. Dès réception de ce message, on passe à l'opération suivante.
6) **Opération E₆** : le microprocesseur MPH₁ envoie alors un message au système hôte H₁ indiquant que le transfert du bloc de données à écrire dans les tampon hôte et tampon mémoire a été effectué. L'hôte considère alors que le bloc de données à écrire a été écrit dans la ressource considérée alors que cette écriture n'a pas encore réellement eu lieu.
   Pour le système hôte H₁, on voit que le temps d'accès à la mémoire à disques réservée est donc masqué, et il peut réutiliser dans sa mémoire centrale, la zone qu'il avait expressément réservée pour le bloc de données à écrire. On passe à l'opération suivante :
7) **Opération E₇** : sous la conduite du microprocesseur MPD₁, le bloc de données est écrit sur l'un des disques rotatifs de la ressource considérée. Pour ce faire, le programme d'écriture mis en oeuvre par ce microprocesseur découpe le bloc de données à écrire en secteurs ayant tous la même longueur comme il est d'usage courant dans les mémoires à disques dites à format fixe, comme il est indiqué à la figure 5B. Les données sont divisées en secteurs Sᵢ, Sⱼ, Sₖ, contenant le même nombre d'octets (par exemple 512). Dans tout secteur Sⱼ, on trouve à écrire successivement un préambule HEⱼ (Header, en anglais), un bloc de données DOⱼ et un postambule ICⱼ. L'ensemble des informations d'un secteur est inscrit sur tout ou partie d'une ou de plusieurs pistes (si le bloc de données à écrire est suffisamment long) de l'un des disques rotatifs de la ressource. Le préambule contient des informations de localisation physique du secteur Sⱼ sur la piste considérée du disque magnétique et le postambule des informations de vérification de l'intégrité des données pour vérifier si tous les octets du secteur Sⱼ enregistrés sont corrects. Cette organisation d'écriture des informations par secteurs, et la répartition de celle-ci à l'intérieur des secteurs est parfaitement connue et utilisée couramment dans les mémoires à disques conventionnelles. Lorsque l'écriture du bloc de données est terminée sur le disque de la ressource considérée, celle-ci est libérée par le microprocesseur MPD₁ ainsi que le tampon mémoire MTD₁. Le microprocesseur en question envoie alors un message de libération à l'adaptateur HA₁. On passe à la dernière étape.
8) **Etape E₈** : le microprocesseur MPH₁ libère son tampon hôte MTH₁.

On considère désormais la figure 5A.

Dans une forme de réalisation particulière préférée de l'invention, chacune des interfaces DEI₁ et DEI₂ est constituée par une mémoire électronique, appelée ainsi couramment par les hommes du métier ou encore disque électronique.

Le disque électronique DEI₁ comprend un ensemble de commandes EC₁ et un plan mémoire PM.

L'ensemble de commandes EC₁ est relié par une liaison L₁ à la mémoire à disques de sauvegarde MSD₁, cette dernière étant reliée par une liaison L₂ au processeur principal PR₂.

L'ensemble de commandes EC₁ comprend notamment, une interface IB₁ de communication avec le bus B₁, une interface de communication IB₂ avec le bus B₂, un microprocesseur de commandes MPE et la mémoire associée à ce microprocesseur M₁, ainsi qu'une interface IF₁ avec la liaison L₁. Ces différents éléments échangent des informations par l'intermédiaire du bus interne BI₁ de l'ensemble de commandes EC₁.

Le plan mémoire PM se compose par exemple de deux plans mémoire P₁ et P₂. Le plan mémoire P₁ comporte une pluralité de colonnes de mémoires RAM par exemple, à savoir les colonnes 1R₁, ..., 1Rⱼ, ..., 1Rₙ. De même, le plan mémoire P₂ comprend une pluralité de colonnes de mémoires semiconductrices RAM, à savoir 2R₁, ..., 2Rⱼ, ..., 2Rₙ.

Les informations (données et adresses où sont localisées ces données à l'intérieur des mémoires RAM) provenant de ou allant vers le plan mémoire P₁ sont transportées par un bus BDA₁, alors que les informations circulant entre les deux plans mémoire P₁ et P₂ sont transportées par un bus BDA₂ identiques au bus BDA₁. Chacun de ces deux bus se compose en fait d'un bus de données et d'un bus d'adresse. A l'intérieur des plans mémoire P₁ et P₂ chacun des deux bus BDA₁ et BDA₂ se subdivise en un nombre suffisant de branches pour alimenter l'ensemble des colonnes de chacun de ces deux plans.

Le processeur central PR₂ (le processeur central PR₁ a une structure tout-à-fait identique) comprend deux interfaces de communication respectivement avec les bus B₁ et B₂, à savoir IB₃ et IB₄, un bus de communication BI₂, un microprocesseur central MPC, la mémoire associée à ce microprocesseur M₂ et enfin une interface IF₂ avec la liaison L₂.

Les interfaces IB₁, IB₂, IB₃, IB₄ sont de même type que les interfaces IBH₁, IBH₂, IBD₁, IBD₂ (voir plus haut).

Les interfaces IF₁ et IF₂ sont des interfaces normalisées IPI-2. Lorsque l'on désire écrire des informations dans le disque électronique DEI₁, celles-ci transitent par l'un des deux bus B₁ ou B₂, passent par l'interface IB₁ (IB₂) avant d'être transmises à la mémoire M₁ associée au microprocesseur MPE. Celui-ci, en fonction des endroits disponibles dans l'un comme l'autre des plans mémoire P₁ et P₂, inscrit les informations dans celles-ci. Pour plus de détails sur le fonctionnement de l'unité de disque électronique DEI₁, on se reportera utilement à la demande de brevet français N° 89.15914, déposée le 1er décembre 1989 par la Société demanderesse.

Le procédé d'écriture rapide selon l'invention s'applique également à la mémoire électronique DEI₁. Le bloc des données à écrire est divisé, de la même façon que dans les mémoires à disques rotatifs, en secteurs Sᵢ, Sⱼ, Sₖ, contenant le même nombre d'octets, l'ensemble des informations d'un secteur étant inscrit dans des emplacements mémoires dont les adresses se suivent, par exemple d'une unité. Dans une forme préférée de réalisation de l'invention, les données sont écrites sous un format de 39 bits, soit 32 bits utiles répartis en quatre octets ajoutés à 7 bits de correction d'erreur dits ECC (Error Corrector Code), ce mode de correction d'erreur étant conventionnellement utilisé dans les mémoires RAM dynamiques.

Pour utiliser le procédé d'écriture rapide selon l'invention dans un disque électronique tel que DEI₁, il suffit de remplacer, dans toutes les explications qui ont été données plus haut, l'adaptateur disque DA₁ par l'ensemble de commandes EC₁, le microprocesseur MPE jouant le même rôle que jouait le microprocesseur MPD₁, le plan mémoire PM jouant le même rôle que le tampon hôte MTD₁ de l'adaptateur hôte. Une fois que les données sont écrites dans le plan mémoire (elles sont donc écrites également dans le tampon hôte MTH₁) il y a mise à jour, en temps masqué, de la mémoire à disques de sauvegarde MSD₁ (on voit que celle-ci joue dans le procédé d'écriture rapide le rôle que jouait la ressource dans le procédé d'écriture rapide décrit ci-dessus dans son application aux mémoires à disques).

On voit que le procédé d'écriture rapide et de sécurisation des données s'applique donc de manière identique, qu'il s'agisse de mémoires à disques conventionnelles telles que D₁ à D₅, ou de disques électroniques tels que DEI₁ ou DEI₂.

Le dispositif de mémoire de masse selon l'invention propose donc bien un procédé d'écriture rapide assurant une totale sécurisation des données puisque les données qui y sont inscrites sont parfaitement protégées vis-à-vis des divers incidents de fonctionnement (voir plus haut) pouvant survenir.

## Revendications

1. Procédé sécurisé d'écriture rapide d'informations pour au moins un dispositif de mémoire de masse (DMM₁) appartenant à un système informatique comportant au moins un hôte central (H₁, H₂), deux unités de contrôle (UC₁, UC₂) connectées à un premier et à un second bus de type parallèle (B₁, B₂),
caractérisé en ce que ledit au moins un hôte central (H₁, H₂) étant relié à chacun desdits bus par au moins un premier adaptateur hôte (HA₁, HA₂) appartenant à une première desdites unités de contrôle (UC₁, UC₂), ladite mémoire de masse (D₁ à D₅) étant reliée à chacun desdits bus par un premier et un second adaptateur mémoire de masse (DA₁, DA₂) respectivement, lesdits adapteurs mémoire appartenant respectivement à ladite première et à la seconde desdites unités de contrôle,
I) on mémorise le bloc de données à écrire dans ledit au moins un premier adaptateur hôte (HA₁) puis dans ledit premier adaptateur mémoire (DA₁) par dialogue entre ledit au moins un hôte central (H₁, H₂) et ledit au moins un premier adaptateur hôte (HA₁) d'une part, et entre ledit au moins un premier adaptateur hôte et ledit premier adaptateur mémoire de masse (DA₁) d'autre part,
II) ledit premier adaptateur mémoire de masse (DA₁) demande la réservation de la mémoire de masse (D₁ à D₅, D₆ à D₁₀) en vue d'y écrire le bloc précité,
III) dès que la réservation est obtenue, ledit premier adaptateur mémoire de masse (DA₁) en informe ledit au moins un premier adaptateur hôte (HA₁) qui envoie alors un signal d'acquittement audit au moins un hôte central (H₁, H₂),
IV) l'opération d'écriture dudit bloc dans son entier est effectuée dans ladite mémoire de masse, sous la conduite dudit premier adaptateur mémoire de masse (DA₁), dans tous les cas de son bon fonctionnement ou dudit second adaptateur mémoire de masse (DA₂) lorsque ce premier est défectueux.

2. Procédé selon la revendication 1 caractérisé en ce que la première opération I comprend les étapes successives suivantes :
1) ledit au moins un hôte central (H₁, H₂) envoie une requête d'écriture audit au moins un premier adaptateur hôte (HA₁),
2) ce dernier demande audit au moins un hôte central le transfert dudit bloc des données à écrire,
3) ledit bloc dans son entier est mémorisé en premier lieu dans un premier tampon hôte (MTH₁) appartenant audit au moins un premier adaptateur hôte (HA₁), puis également dans un premier tampon mémoire (MTD₁), appartenant audit premier adaptateur mémoire (DA₁).

3. Procédé selon l'une des revendications 1 ou 2 caractérisé en ce que, lorsque ledit premier adaptateur mémoire de masse (DA₁) est défectueux après l'opération III,
a) ledit bloc de données est également envoyé par ledit au moins un premier adaptateur hôte (HA₁) dans ledit second adaptateur mémoire de masse (DA₂),
b) ce dernier effectue alors, en lieu et place dudit premier adaptateur mémoire de masse, les opérations II, III, IV.

4. Procédé selon l'une quelconque des revendications 1, 2, 3, caractérisé en ce que, ladite première unité de contrôle (UC₁) comprenant un premier processeur central (PR₁), et au moins une première mémoire à disques rotatifs de sauvegarde (MSD₁) reliée d'une part audit processeur central (PR₁) de cette unité et d'autre part à une carte d'interface (DEI₂) avec lesdits bus (B₁, B₂), appartenant à ladite seconde unité de contrôle (UC₂), cette dernière comprenant un deuxième processeur central (PR₂) et au moins une seconde mémoire à disques rotatifs de sauvegarde (MSD₂) reliée d'une part audit processeur central (PR₂) de ladite seconde unité et d'autre part à une carte d'interface (DEI₁) avec lesdits bus, appartenant à ladite première unité de contrôle, lesdites unités de contrôle étant à alimentation indépendante, chaque unité de contrôle possédant sa propre batterie de protection (BAT₁, BAT₂), l'alimentation de secteur étant coupée ou défectueuse pendant l'opération IV, les opérations suivantes sont effectuées :
V) ledit premier processeur central (PR₁) extrait ledit bloc de données à écrire contenu dans ledit premier tampon mémoire (MTD₁) et le transfère intégralement dans ladite au moins une première mémoire à disques de sauvegarde (MSD₁),
VI) ledit premier processeur (PR₁) déconnecte ensuite la batterie de protection (BAT₁) de l'unité de contrôle (UC₁) à laquelle il appartient.

5. Procédé selon la revendication 4 caractérisé en ce que, dès que l'alimentation secteur est redevenue normale,
VII) on réinitialise lesdites première et seconde unités de contrôle (UC₁, UC₂),
VIII) ledit premier processeur (PR₁) prévient ledit au moins un hôte central (H₁, H₂) et transfère ledit bloc de données à écrire contenues dans la mémoire à disque de sauvegarde (MSD₁) dans ledit premier tampon hôte (MTH₁) et dans ledit premier tampon mémoire (MTD₁),
IX) on reprend les opérations II, III,IV.

6. Procédé selon la revendication 4, caractérisé en ce que, ledit premier ou ledit second processeur (PR₁, PR₂) étant défectueux, les opérations V et VI sont effectuées respectivement par ledit second ou ledit premier processeur (PR₂, PR₁).

7. Procédé selon la revendication 5, caractérisé en ce que, ledit premier ou ledit second processeur (PR₁, PR₂) étant défectueux, les opérations VII, VIII, IX, sont effectuées respectivement par ledit second ou ledit premier processeur (PR₂, PR₁).

8. Procédé selon l'une des revendications 1, 2, caractérisé en ce que, l'un ou l'autre desdits bus étant défectueux, pendant l'opération IV, cette dernière continue à être effectuée normalement, sous la conduite dudit premier adaptateur mémoire de masse (DA₁).

9. Procédé selon l'une des revendications 1, 2, 4, 5 caractérisé en ce que ledit au moins un premier adaptateur hôte étant connecté à la fois auxdits bus (B₁, B₂), et lesdits premier et second adaptateurs mémoire (DA₁, DA₂) étant connectés respectivement l'un à un premier desdits bus (B₁), l'autre au second desdits bus (B₂), ledit second adaptateur mémoire de masse, effectue, en lieu et place du premier, les opérations I à IV, V à IX.

10. Système informatique caractérisé en ce qu'il inclut le dispositif de mémoire de masse (DMM₁, DMM₂) mettant en oeuvre le procédé sécurisé d'écriture rapide selon l'une des revendications 1 à 9.

## Patentansprüche

1. Gesichertes Datenschnelleseverfahren für wenigstens eine Massenspeichereinrichtung (DMM₁), die einem Informationssystem mit wenigstens einem zentralen Hostsystem (H₁, H₂) und zwei Steuereinheiten (UC₁, UC₂) angehört, die mit einem ersten und einem zweiten Bus (B₁, B₂) vom parallelen Typ verbunden sind,
dadurch gekennzeichnet, daß bei mit jedem der Busse durch wenigstens einen ersten Hostadapter (HA₁, HA₂), der einer ersten der Steuereinheiten (UC₁, UC₂) angehört, verbundenem, wenigstens einem zentralen Hostsystem (H₁, H₂) und bei mit jedem der Busse jeweils durch einen ersten und einen zweiten Massenspeicheradapter (DA₁, DA₂), der der ersten bzw. der zweiten der Steuereinheiten angehört, verbundenem Massenspeicher (D₁ bis D₅), folgendes vorgesehen ist:
I) man speichert den zu schreibenden Datenblock in dem wenigstens einen ersten Hostadapter (HA₁), dann in dem ersten Speicheradapter (DA₁) durch einen Dialog zwischen dem wenigstens einen zentralen Hostsystem (H₁, H₂) und dem wenigstens einen ersten Hostadapter (HA₁) einerseits und zwischen dem wenigstens einen ersten Hostadapter und dem ersten Massenspeicheradapter andererseits,
II) der erste Massenspeicheradapter (DA₁) fordert die Reservierung des Massenspeichers (D₁ bis D₅, D₆ bis D₁₀) im Hinblick auf ein dortiges Einschreiben des zuvor genannten Blockes an,
III) sobald die Reservierung erhalten wurde, informiert der erste Massenspeicheradapter (DA₁) darüber den wenigstens einen Hostadapter (HA₁), der nun ein Bestätigungssignal an das wenigstens eine zentrale Hostsystem (H₁, H₂) sendet,
IV) die Operation des Einschreibens des Blockes in seiner Gesamtheit erfolgt in den Massenspeicher, unter der Führung des ersten Massenspeicheradapters (DA₁) in allen Fällen seines einwandfreien Betriebs, oder unter der Führung des zweiten Massenspeicheradapters (DA₂), wenn der erste fehlerhaft ist.

2. Verfahren nach Anspruch 1, dadurch gekennzeichnet, daß der erste Schritt I die nachstehenden aufeinanderfolgenden Schritte enthält:
1) das wenigstens eine zentrale Hostsystem (H₁, H₂) sendet eine Schreibanforderung an den wenigstens einen ersten Hostadapter (HA₁),
2) dieser letztere fordert von dem wenigstens einen zentralen Hostsystem die Übertragung des zu schreibenden Datenblockes an,
3) der Block wird insgesamt an erster Stelle in einem dem wenigstens einen ersten Hostadapter (HA₁) zugehörigen ersten Hostpufferspeicher (MTH₁) gespeichert, dann auch in einem dem ersten Speicheradapter (DA₁) zugehörigen ersten Pufferspeicher (MTD₁).

3. Verfahren nach Anspruch 1 oder 2, dadurch gekennzeichnet, daß dann, wenn der erste Massenspeicheradapter (DA₁) nach der Operation III fehlerhaft ist,
a) der Datenblock auch durch den wenigstens einen Hostadapter (HA₁) in den zweiten Massenspeicheradapter (DA₂) gesendet wird, und
b) dieser letztere nun anstelle des ersten Massenspeicheradapters die Operationen II, III und IV bewirkt.

4. Verfahren nach einem der Ansprüche 1, 2 und 3, dadurch gekennzeichnet, daß dann, wenn die erste Steuereinheit (UC₁) einen ersten Steuerprozessor (PR₁) und wenigstens einen Sicherungsdrehplattenspeicher (MSD₁) enthält, der über die Busse (B₁, B₂) einerseits mit dem zentralen Prozessor (PR₁) dieser Einheit und andererseits mit einer Schnittstellenkarte (DEI₂) verbunden ist, die zu der zweiten Steuereinheit (UC₂) gehört, diese letztere einen zweiten Steuerprozessor (PR₂) und wenigstens einen zweiten Sicherungsdrehplattenspeicher (MSD₂) enthält, der über die Busse einerseits mit dem zentralen Prozessor (PR₂) der zweiten Einheit und andererseits mit einer Schnittstellenkarte (DEI₁) verbunden ist, die zu der ersten Steuereinheit gehört, die Steuereinheiten getrennt versorgt werden, jede Steuereinheit ihre eigene Schutzbatterie (BAT₁, BAT₂) besitzt und während der Operation IV die Netzversorgung unterbrochen oder fehlerhaft wird, die folgenden Operationen durchgeführt werden:
V) der erste zentrale Prozessor (PR₁) entnimmt den zu schreibenden, in dem ersten Pufferspeicher (MTD₁) enthaltenen Datenblock und überträgt ihn vollständig in den wenigstens einen ersten Sicherungsplattenspeicher (MSD₁),
VI) der erste Prozessor (PR₁) schaltet dann die Schutzbatterie (BAT₁) der Steuereinheit (UC₁) ab, zu der er gehört.

5. Verfahren nach Anspruch 4, dadurch gekennzeichnet, daß, sobald die Netzversorgung wieder einen normalen Zustand angenommen hat,
VII) von neuem die erste und die zweite Steuereinheit (UC₁, UC₂) initialisiert werden,
VIII) der erste Prozessor (PR₁) das wenigstens eine zentrale Hostsystem (H₁, H₂) benachrichtigt und den Block von zu schreibenden, in dem Sicherungsplattenspeicher (MSD₁) enthaltenen Daten in den ersten Hostpufferspeicher (MTH₁) und in den ersten Pufferspeicher (MTD₁) überträgt, und
IX) die Operationen II, III und IV erneut aufgenommen werden.

6. Verfahren nach Anspruch 4, dadurch gekennzeichnet, daß bei fehlerhaftem erstem oder fehlerhaftem zweitem Prozessor (PR₁, PR₂) die Operationen V und VI von dem zweiten bzw. dem ersten Prozessor (PR₂, PR₁) ausgeführt werden.

7. Verfahren nach Anspruch 5, dadurch gekennzeichnet, daß bei fehlerhaftem erstem oder bei fehlerhaftem zweitem Prozessor (PR₁, PR₂) die Operationen VII, VIII, IX von dem zweiten bzw. dem ersten Prozessor (PR₂, PR₁) ausgeführt werden.

8. Verfahren nach einem der Ansprüche 1, 2, dadurch gekennzeichnet, daß dann, wenn der eine oder der andere der Busse während der Operation IV fehlerhaft ist, diese letztere unter der Führung des ersten Massenspeicheradapters (DA₁) weiter normal ausgeführt wird.

9. Verfahren nach einem der Ansprüche 1, 2, 4 und 5, dadurch gekennzeichnet, daß in dem Fall, daß der wenigstens eine erste Hostadapter gleichzeitig mit den Bussen (B₁, B₂) verbunden ist und von den ersten und zweiten Speicheradaptern (DA₁, DA₂) der eine mit einem ersten (B₁) der Busse und der andere mit dem zweiten (B₂) der Busse verbunden ist, der zweite Massenspeicheradapter anstelle des ersten die Operationen I bis IV und V bis IX ausführt.

10. Informationssystem, dadurch gekennzeichnet, daß es die Massenspeichereinrichtung (DMM₁, DMM₂) enthält, bei dem das gesicherte Schnelleseverfahren gemäß einem der Ansprüche 1 bis 9 benutzt wird.

## Claims

1. A fail-safe process for the fast writing of information for at least one bulk memory device (DMM₁) belonging to a computer system comprising at least one central host (H₁, H₂), two control units (UC₁, UC₂) connected to a first and to a second bus of the parallel type (B₁, B₂),
characterised in that said at least one central host (H₁, H₂) being connected to each of said buses by at least one first host adaptor (HA₁, HA₂) belonging to a first of said control units (UC₁, UC₂), said bulk memory (D₁ to D₅) being connected to each of said buses by a first and a second bulk memory adaptor (DA₁, DA₂) respectively, said memory adaptors belonging respectively to said first and said second control units,
I) the data block to be written is stored in said at least one first host adaptor (HA₁) then in said first memory adapter (DA₁) by dialogue between said at least one central host (H₁, H₂) and said at least one first host adapter (HA₁) on the one hand, and between said at least one first host adapter and said first bulk memory adapter (DA₁) on the other hand,
II) said first bulk memory adapter (DA₁) requests the reservation of the bulk memory (D₁ to D₅, D₆ to D₁₀) with a view to writing the aforementioned block therein,
III) as soon as reservation has been obtained, said first bulk memory adapter (DA₁) informs said at least one first host adapter (HA₁) of the fact, and the latter then sends an acknowledgment signal to said at least one central host (H₁, H₂),
IV) the operation of writing said block in its entirety is effected within said bulk memory, under the control of said first bulk memory adapter (DA₁) in all cases where it operates correctly, or of said second bulk memory adapter (DA₂) when this first is defective.

2. A process according to Claim 1 characterised in that the first operation I comprises the following successive steps:
1) said at least one central host (H₁, H₂) sends a writing request to said at least one first host adapter (HA₁),
2) the latter requests said at least one central host to transfer said data block to be written,
3) said block in its entirety is stored initially in a first host buffer (MTH₁) belonging to said at least one first host adapter (HA₁), then also to a first memory buffer (MTD₁) belonging to said first memory adapter (DA₁).

3. A process according to one of Claims 1 or 2 characterised in that, when said first bulk memory adapter (DA₁) is defective after operation III,
a) said data block is also sent by said at least one first host adapter (HA₁) to said second bulk memory adapter (DA₂).
b) the latter then carries out operations II, III, IV in place of said first bulk memory adapter.

4. A process according to any one of Claims 1, 2, 3, characterised in that, said first control unit (UC₁) comprising a first central processor (PR₁) and at least one first back-up rotary disk memory (MSD₁) connected, on the one hand to said central processor (PR₁) of that unit, and on the other hand to an interface card (DEI₂) with said buses (B₁, B₂), belonging to said second control unit (UC₂), this latter comprising a second central processor (PR₂) and at least one second back-up rotary disk memory (MSD₂), connected on the one hand to said central processor (PR₂) of said second unit and on the other hand to an interface card (DEI₁) with said buses, belonging to said first control unit, said control units having an independent power supply, each control unit having its own protection battery (BAT₁, BAT₂), if the mains supply is cut off or defective during operation IV, the following operations are carried out:
V) said first central processor (PR₁) extracts said data block to be written contained in said first memory buffer (MTD₁) and transfers it as a whole into said at least one first back-up disk memory (MSD₁),
VI) said first processor (PR₁₎ then disconnects the protection battery (BAT₁) of the control unit (UC₁) to which it belongs.

5. A process according to Claim 4 characterised in that, as soon as the mains supply is restored to normal,
VII) said first and second control units (UC₁, UC₂) are re-initialised,
VIII) said first processor (PR₁) warns said at least one central host (H₁, H₂) and transfers said data block to be written contained in the back-up disk memory (MSD₁) into said first host buffer (MTH₁) and into said first memory buffer (MTD₁),
IX) operations II, III, IV are repeated.

6. A process according to Claim 4 characterised in that, if said first or said second processor (PR₁, PR₂) is defective, operations V and VI are carried out respectively by said second or said first processor (PR₂, PR₁).

7. A process according to Claim 5 characterised in that, if said first or said second processor (PR₁, PR₂) is defective, operations VII, VIII, IX are carried out respectively by said second or said first processor (PR₂, PR₁).

8. A process according to one of Claims 1, 2, characterised in that, if one or other of said buses is defective during operation IV, the latter continues to be carried out as normal, under the control of said first bulk memory adapter (DA₁).

9. A process according to one of Claims 1, 2, 4, 5 characterised in that said at least one first host adapter being connected at once to said buses (B₁, B₂), and said first and second memory adapters (DA₁, DA₂) being connected respectively one to a first of said buses (B₁), the other to the second of said buses (B₂), said second bulk memory adapter carries out operations I to IV, V to IX, in place of the first.

10. A computer system characterised in that it includes the bulk memory device (DMM1, DMM2) implementing the fail-safe rapid writing process according to one of Claims 1 to 9.
